# EUROPEAN PATENT APPLICATION

(11) **EP 2 838 297 A1**
(43) Date of publication of application: **18.02.2015**
(21) Application number: 14178410.8
(22) Date of filing: 24.07.2014
(51) Int. Cl.: H04W 72/00, H04W 28/06

(54) **Apparatus and methods for semi-persistent scheduling**

(30) Priority: 15.08.2013 US 201313967745
(71) Applicant: General Dynamics C4 Systems, Inc., Scottsdale AZ 85257-3812 (US)
(72) Inventor: Speight, Timothy, Bristol, BS2 8LZ (GB)
(74) Representative: Optimus Patents Ltd

(57) **Abstract**

A base station for supporting communications with a terminal device in a wireless communications system is described. The base station comprises a dynamic scheduler module; a semi-persistent scheduler, SPS, module, a receiver arranged to receive at least one data packet; and a compressor module arranged to compress the received at least one data packet prior to transmission to the terminal device. A control processor is operably coupled to the compressor module and arranged to determine a compression state of the compressor module and based thereon select one of the dynamic scheduler module and semi persistent scheduler module to allocate resource for communicating with the terminal device. A transmitter is arranged to transmit the compressed at least one data packet to the terminal device on the allocated resource.

## Description

### Field of the invention

The field of this invention relates to methods and apparatus for semi-persistent scheduling, and in particular compression context aware semi-persistent scheduling.

### Background of the Invention

A recent development in third generation (3G) wireless communications is the long term evolution (LTE) cellular communication standard, sometimes referred to as 4^{th} generation (4G) systems. Both of these technologies are compliant with third generation partnership project (3GPP™) standards. In a traditional LTE system, a scheduler in an evolved NodeB (eNodeB) distributes available radio resources (e.g. radio bearers) in a particular cell amongst user equipment (UEs). Generally, the eNodeB allocates downlink or uplink radio resources to each UE based respectively on the downlink data buffered in the eNodeB and on Buffer Status Reports (BSRs) received from the UE. Generally, in this process, the eNodeB considers the Quality-of-service (QoS) requirements of each configured radio bearer, and selects the size of a Medium Access Control Protocol Data Unit (MAC PDU) to be used. The conventional approach, as defined in the LTE cellular communication standard, is to utilise dynamic scheduling by means of downlink assignment messages for the allocation of downlink transmission resources and uplink grant messages for the allocation of uplink transmission resources, which are generally valid for a specific single subframe. These messages also, generally, indicate whether the scheduled data is to be the first transmission of a new transport block (TB) or a retransmission, by means of a 1-bit New Data Indicator (NDI). These messages are transmitted on the Physical Downlink Control CHannel (PDCCH) using a Cell Radio Network Temporary Identifier (C-RNTI) to identify the intended UE.

This scheduling mechanism generally provides an allocation of resources for a single Transmission Time Interval (TTI) of length 1 msec. This mechanism generally works well for bursty (non-Guaranteed Bit Rate (GBR)) data traffic, where a buffer occupancy indication is provided to the scheduler, and subsequent allocations of physical shared channel resources lasting for a single frame are provided to the UE. However, this mechanism typically grants a substantial proportion of the total available physical resources, resulting in only a limited number of PDCCHs being available per subframe.

However, for low rate GBR services, such as Voice-over-IP (VoIP), dynamic scheduling cannot be utilised effectively. In the case of VoIP, a regular allocation of a very small proportion of the total available resources is required. In the case of dynamic scheduling, the signalling resources will be exhausted well before all of the physical shared channel resources have been allocated. Using dynamic scheduling for VoIP applications would limit the total number of users that could access the system.

In 3GPP™ systems, the abovementioned problem was addressed by utilising semi-persistent scheduling (SPS). Semi-persistent scheduling enables radio resources to be semi-statically configured and allocated to a UE for a longer time period than a single subframe, thereby removing the need for specific downlink assignment messages or uplink grant messages over the PDCCH for each subframe. In the case of VoIP, as the amount of radio resources needed are generally predictable, the overhead of the PDCCH can be significantly reduced compared to the case of dynamic scheduling. Generally, utilising SPS in the context of LTE, a modified form of PDCCH is utilised to configure shared channel resources that repeat after a configured number of subframes. These repeated allocations do not require PDCCH signalling and continue until explicit signalling removes the SPS resources or, in the case of the uplink case, the UE has nothing to send for a specified number of consecutive subframes.

However, an issue with utilising VoIP in an LTE system is that LTE is a packet switched technology, and, therefore, VoIP functionality must be utilised in order to support voice services. Voice codecs produce voice packets typically every 20msec and employ a sampling rate typically in the range from 2.4kbps to 32kbps. Generally, in 3GPP™ systems, an adaptive multi-rate (AMR) codec is utilised that typically employs a sampling rate of 12.2kbps, thereby resulting in producing a voice packet size of 244bits. An example of another common codec is wideband-AMR, which typically has a sampling rate of around 12.65kbps. Typically, VoIP functionality results in additional real-time transport protocol (RTP)/user datagram protocol (UDP)/internet protocol (IP) headers, which may have a total size or around 40bytes. Therefore, voice packet size may increase from 244bits to above 600bits in some examples (including MAC, radio link control (RLC), packet data convergence protocol (PDCP) headers when all the additional headers required are accounted for.

Generally, a mechanism such as Robust Header Compression (RoHC) is utilised to reduce the increased header size. In LTE, header compression is important as there is no support for the transport of voice services via the Circuit-Switched (CS) domain. The art specifies a framework that supports a number of different header compression 'profiles'. Examples of the header compression profiles currently supported for LTE are illustrated below in Table. 1. A UE may implement one or more of the RoHC profiles illustrated in Table. 1.

**Table.1 Supported header compression protocols**

| Reference | Usage |
|---|---|
| RFC 4995 | No Compression |
| RFC 3095, RFC 4815 | RTP/UDP/IP |
| RFC 3095, RFC 4815 | UDP/IP |
| RFC 3095, RFC 4815 | ESP/IP |
| RFC 3843, RFC 4815 | IP |
| RFC 4996 | TCP/IP |
| RFC 5225 | RTP/UDP/IP |
| RFC 5225 | UDP/IP |
| RFC 5225 | ESP/IP |
| RFC 5225 | IP |

The support of RoHC is not mandatory for a UE, except those UEs that support VoIP. UEs that support VoIP have to support at least one profile for compression of RTP, UDP and IP. Generally, an eNodeB controls, via Radio Resource Control (RRC) signalling, which of the RoHC profiles that are currently supported by the UE are allowed to be utilised. The RoHC compressors in the UE and eNodeB are then able to dynamically detect IP flow that uses a certain IP header configuration, and, therefore, choose a suitable compression profile from the allowed supported profiles. Generally, RoHC header compression operates by allowing both eNodeB and UE to store static parts of the header (e.g. the IP addresses of the eNodeB and UE), and to update these only when they change. Furthermore, dynamic parts (e.g. the timestamp in the RTP header) are compressed by transmitting only the differences from a reference clock maintained in both the eNodeB and UE. As discussed above, as the static parts of the header components are typically transmitted only at the start of the compression context, successful decompression depends on correct reception of these headers. Typically, the static parts of the header components are included in initialisation and refresh packets, wherein the frequency of initialisation and refresh packet generation will depend on the compression mode employed by the compressor. Feedback is generally used in order to confirm correct reception of initialisation information from the header decompression. Generally, the correct decompression of the received PDCP PDUs is only confirmed periodically, dependent upon the experience of packet losses.

RoHC algorithms generally utilise one of three compressor and decompressor states, wherein every incoming packet may cause the compressor/decompressor to change its state. Usually, each of the three states refers to a defined behaviour and compression level. For example, the compressor generally defines an initialization and refresh (IR) state, First Order (FO) state and Second Order (SO) state. In the IR state, the compressor has generally either just been started or reset, and full packet headers are sent. For example, for 12.2kbps VoIP packets, the packet size, as discussed above, may be above 600 bits. In the FO state, the compressor has generally detected and stored static fields, such as IP addresses and port numbers on both sides of the connection. Therefore, in the FO state, headers are generally partially compressed, and for 12.2kpbs VoIP packets, the packet size is around 440 to 320 bits. In the SO state, the compressor is generally suppressing dynamic fields such as RTP sequence numbers, and sending only a logical sequence number and partial checksum to cause the other side to predictively generate and verify the headers of the next expected packet. In the SO state, headers are fully compressed and the RTP/UDP/IP header can be compressed to a single byte. In this state, 12.2kpbs VoIP packets can be around 296 bits. The compressor always starts in the IR state, and transitions between the SO state via the FO state. Therefore, at the start of a VoIP call, for example, when RoHC is employed, the packet size that the eNodeB needs to carry can vary dramatically. Generally, transitions between the various states of the compressor occur when:
(i) a packet is compressed that contains too many variations,
(ii) the compressor receives a positive/negative feedback message from the decompressor, or
(iii) the compressor periodically refreshed the content.

Typically, the decompressor defines three states, namely, the no context state (NC), the static context state (SC) and the full context state (FC). Transitions typically occur between these states if the decompressor successfully decompresses a packet or the decompressor fails to decompress several packets.

The change in compression states has the effect of varying the size of transmitted and received messages within the network. This results in scheduling within the RAN being difficult to predict and control. This is a particular problem when utilising semi-persistent scheduling, as the grant of resources can not easily be modified to accommodate the changes in header size. The use of RoHC is one cause of this bit size variation. Generally, RoHC varies the packet size at the beginning of a VoIP call. Additionally, compressed VoIP packet size may also vary during a call if the decompressor loses context information. In this instance, the decompressor would be unable to decompress further VoIP packets without additional header information being provided by the compressor, resulting in the compressor moving out of the SO state. A further cause of compressed VoIP packet variation may be if the compressor detects that the packet it is compressing has changed significantly, such that the header used in the SO state is not adequate to describe this change. Furthermore, code rate modification may be an additional source of packet size variation, where the voice codec being utilised can vary its data rate. Typically in LTE applications, an adaptive multi-rate (AMR) codec is utilised that is able to vary its data rate from around 12.2kbps to 4.75kbps. This results in a VoIP packet size variation from around 244 to 95 bits.

Therefore, from the abovementioned examples, it is clear that a combination of RoHC with at least a variable rate codec may result in significant variation in a voice packet that is to be carried on SPS resources. Therefore, there is a need to prevent this variation from reducing the effectiveness of SPS.

In 3G systems, a transport format combination indicator (TFCI) is utilised to provide an autonomous way of matching these variations. Unfortunately, there is no such autonomous system in LTE. Therefore, in LTE, an additional PDCCH may have to be sent to the UE from the eNodeB in order to indicate a change in the transport block size due to the abovementioned packet variations. For example, each time the packet size varies due to a change in the RoHC compression, or due to a change in the voice codec data rate is detected by the eNodeB, the eNodeB may have to signal this to the UE via a PDCCH. Therefore, a problem may arise because the purpose of SPS is to reduce PDCCH usage. However, utilising compression may increase the usage of PDCCHs.

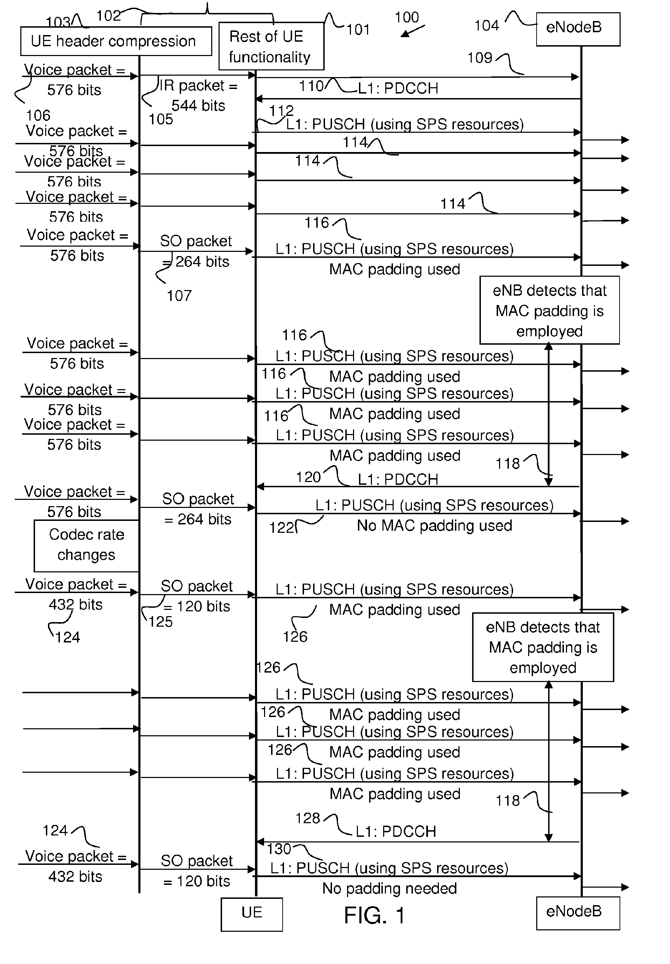

FIG. 1 illustrates the abovementioned problem of packet size variation increasing the potential number of physical downlink control channels (PDCCHs), which is required when using SPS scheduling in an uplink message sequence chart 100 in order to maintain adequate transfer block size. FIG. 1 comprises a UE 102, which has been split into UE functionality 101 and UE header compression 103, and an eNodeB 104. In this example, it is assumed that connection establishment has already been completed between the UE 102 and eNodeB 104.

Generally, semi-persistent scheduling resources are then started when the voice codec within a VoIP call is using a sample rate of 12.2kbps, resulting in voice packets being created 106 within the UE 102 every 20msec. Voice packet(s) 106 comprise(s) voice data of 244 bits, codec mode request (CMR) of 10 bits and Table of Contents (ToC) header. However, the voice packet(s) 106 need(s) to be byte aligned, so the overall voice packet is 256 bits. Further, the RTP/UDP/IPv4 header is 40 bytes (320 bits), leading to a total voice packet 106 of 576 bits. In this case, it is assumed that voice packet 106 is at the start of the VOIP call and, therefore, the UE header compression 103 is in the IR state. In some cases, the eNodeB 104 may not automatically be aware that voice packet(s) 106 has arrived at the UE's 102 buffers. Therefore, in some examples, the UE 102 may initially transmit a buffer status report (BSR) 109 to the eNodeB 104 to inform the eNodeB 104 of its buffer occupancy. In response to this, eNodeB 104 transmits a PDCCH message 110 to UE 102, comprising a SPS Cell Radio Network Temporary Identifier (C-RNTI) and uplink SPS resources that are enough to enable the whole MAC PDU to be transmitted. In some examples, eNodeB 104 may, prior to transmitting PDCCH message 110 to UE 102, transmit an (RRC) message to UE 102 comprising information on the periodicity of future SPS resources. In response to PDCCH message 110, UE 102 transmits a physical uplink shared channel (PUSCH) message 112 to the eNodeB 104. The PUSCH message 112 has a PDCP PDU transfer block size that is suitable for voice packet 106. In this case, MAC PDU has a 568 bit IR packet and 3 bytes of PDCP/RLC/MAC header.

During subsequent PUSCH messages 114, the UE header compression 103 transitions from its initial IR state to its SO state, via its FO state. This results in the RTP/UDP/IPv4 header being compressed to 1 byte. As a result, the SO compressed voice packet 107 is a new packet that is now, after a higher order compression (i.e. now 264 bits in size), a much smaller packet than the PDCP PDU transfer block size for previous IR compressed messages, for example IR packet 105. Note that the actual uncompressed packets associated with 106 and 107 are the same size it is just that after the compressed packet 107 is now reduced in size to 264 bits. Therefore, the UE 102 is required to add considerable MAC padding to the subsequent PUSCH message(s) 116 in order to utilise the currently defined PDCP PDU transfer block size. Therefore PUSCH message(s) 116 is/are transmitted by UE 102 to eNodeB 104 with considerable MAC padding in order to minimize PDCCH resource usage. In this case, the MAC padding is added to ensure that the eNodeB's currently defined transport block size fits the current SPS resource. Transmitted PUSCH message(s) 116 comprises a MAC PDU of 288 bits (i.e. 264 bits and 1 octet headers for each of PDCP, RLC and MAC layers), rather than the 568 bits before complete compression. In this case, eNodeB 104 detects that the UE 102 has utilised MAC padding in its subsequent PUSCH message(s) 116. However, the eNodeB 104 does not want to transmit a control message to the UE 102 in order to reduce its transfer block size immediately, in case the UE header compression 103 has not fully compressed the message, as this would lead to further control messages having to be sent, thereby increasing the usage of PDCCH resources and unfortunately negating the effect of semi persistent scheduling.

Therefore, the eNodeB 104 applies a hysteresis timer 118 that is long enough to ensure that the UE header compression 103 has a fully compressed voice packet 106. Although the hysteresis timer 118 may reduce the number of PDCCH resources required, a disadvantage with this method is that many further PUSCH messages 116 employing MAC padding will be transmitted before the eNodeB 104 transmits a further PDCCH message 120. A further disadvantage with utilising a hysteresis times may be that the scheduler has to deal with significant variation in packet sizes. After the hysteresis timer 118 has expired, eNodeB 104 transmits PDCCH message 120 to UE 102 that modifies, and in this case reduces, the amount of physical resources and/or modulation and coding scheme (MCS) so as to match the required transport block size required to send the compressed voice packet data with no, or minimal, MAC padding. In this case, UE 102, in response to PDCCH message 120, transmits a subsequent PUSCH message 122 using SPS resources, but without any MAC padding.

During transmissions, it is possible that the codec rate of voice packet 124 may reduce. In this case, the codec rate has reduced from 12.2kbps to 4.75kbps, resulting in voice data of 95 bits, with a 20msec codec packet period, and subsequent CMR and ToC headers with data byte aligning being required. Therefore, in this case, the voice packet 124 has 112 bits of codec data and 8 bits [currently it is 1 byte due to SO compression] of RTP/UDP/IPv4 header, resulting in an SO compressed packet with a total of 120 bits 125. In this case, the MAC PDU has reduced to 144 bits compared to 288 bits previously. Due to the reduction in packet size, UE 102 must use MAC padding again in subsequent PUSCH message(s) 126 in order to ensure that the currently defined transport block size fits the current SPS resource.

As discussed before, eNodeB 104 detects that PUSCH message(s) 126 is utilising MAC padding and initiates its hysteresis timer 118. In this case, the eNodeB 104 needs to reduce the amount of PDCCH resources transmitted to the UE 102 and, therefore, the eNodeB 104 waits a predetermined amount of time that should allow the codec data rate to stabilise before transmitting a PDCCH message 128. Again, a disadvantage with this operation is that subsequent PUSCH messages 126 are transmitted with MAC padding being employed. PDCCH message 128 modifies the amount of physical resources and or MCS so as to match the required transport block size required to transmit the compressed lower codec rate voice packet 124 with no, or minimal, MAC padding. As a result of PDCCH message 128, UE 102 transmits PUSCH message 130 utilising SPS with no MAC padding employed.

It is clear that in the abovementioned scenario, the SPS scheduler in the eNodeB 104 needs to be able to determine and control a wide range of packet sizes. As a result, a complex and expensive SPS scheduler is required, at least in the eNodeB 104 in order to deal with the size of the variation in voice packets. Furthermore, depending on the trade-off between physical uplink control channel (PUCCH) usage and transfer block size, there may be instances where multiple PUSCHs are transmitted with MAC padding, wasting resources, or instances where PUCCH messages are transmitted regularly to provide the correct transfer block size without padding, thereby negating the benefits/effect of SPS scheduling.

Therefore, there is a need to provide a simpler and more cost effective scheduler, at least in the eNodeB 104, which may not have the disadvantages discussed above.

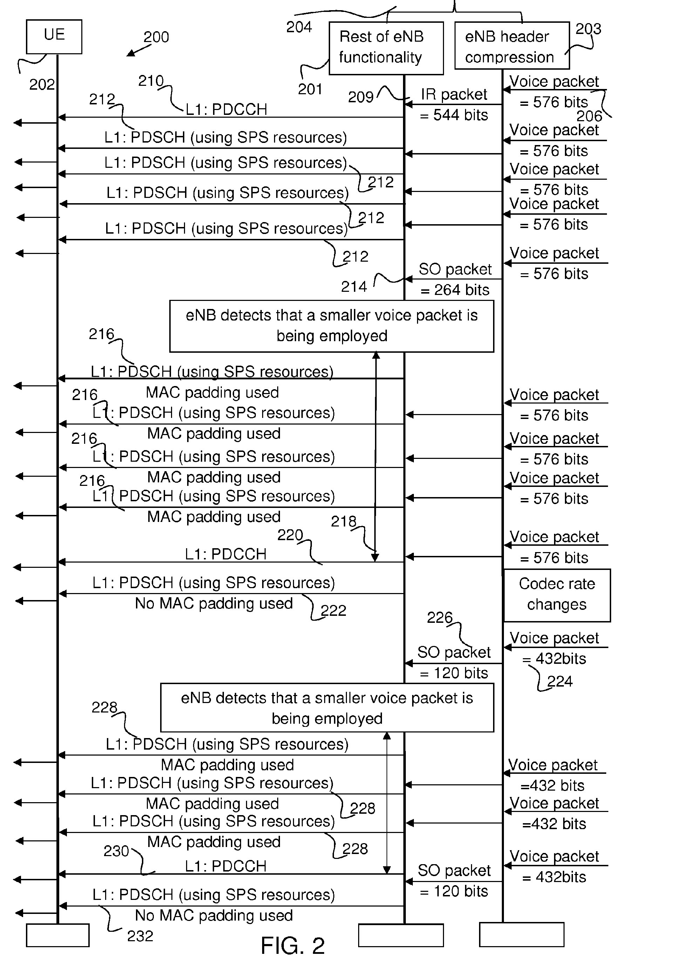

FIG. 2 illustrates the abovementioned problem of packet size variation increasing the potential number of PDCCHs, which is required when using SPS scheduling in a downlink message sequence chart 200 in order to maintain an adequate transfer block size. FIG. 2 comprises a UE 202 and an eNodeB 204, which has been split into eNB functionality 201 and eNB header compression 203. It is assumed that connection establishment message has already been completed between the UE 202 and eNodeB 204.

Generally, semi-persistent scheduling resources are then started when the voice codec within a VoIP call is using a sample rate of 12.2kbps, resulting in voice packets 206 being created within the UE 202 every 20msec. Voice packet(s) 206 comprise(s) voice data of 244 bits, codec mode request (CMR) of 10 bits and Table of Contents (ToC) header. However, the voice packet(s) 106 need(s) to be byte aligned, so the overall voice packet is 256 bits. Further, the RTP/UDP/IPv4 header is 40 bytes (320 bits), leading to a total voice packet 206 of 576 bits. In this case, it is assumed that voice packet 206 is at the start of the VoIP call and, therefore, the eNB header compression 203 is in the IR state. In this case, eNB header compression 203 produces an IR packet of 544 bits 209 that utilises a MAC PDU of 568 bits. In this case, eNodeB 204 transmits a PDCCH message 210 to UE 202, comprising a SPS Cell Radio Network Temporary Identifier (C-RNTI) and downlink SPS resources that are enough to enable the whole MAC PDU to be transmitted. After transmitting PDCCH message 210 to the UE 202, the eNodeB 204 transmits PDSCH message(s) 212, using SPS resources, to the UE 202. At this time, eNB header compression 203 transitions from its IR state to its SO state, via its FO state. This results in a fully compressed SO packet 214 comprising 264 bits compared to the IR packet transmitted previously comprising 544 bits. In this case, SO packet 214 needs to utilise a MAC PDU comprising 288 bits.

At this point the eNodeB 204 detects immediately that a smaller voice packet is being employed by observing RLC buffer occupancy and RLC SDU size, and adds MAC padding to ensure that the SO packet 214 is able to utilise the currently defined SPS resources. In this case, this means that significant amounts of MAC padding need to be employed to increase the transport block size of the SO packet 214 in order to fit current physical downlink shared channel (PDSCH) 212. As a result, PDSCH message 216 is employed that has exactly the same MCS and physical resources used in 212.

However, in the case of PDSCH message(s) 216, a large amount of MAC padding is utilised to ensure that currently defined SPS resources can be utilised without having to utilise PDCCH resources. In this case, although the eNodeB 204 is aware that a smaller voice packet 214 is being transmitted, the eNodeB 204 employs its hysteresis timer 218 in order to minimise PDCCH resources being transmitted to the UE 202. Therefore, in this case, although the number of PDCCH resources may be reduced, a major disadvantage is that multiple PDSCH messages 216 are sent that utilise a large amount of MAC padding.

After the hysteresis timer 218 has expired, which depends on a trade-off between fewer PDCCH messages being transmitted and reducing the amount of PDSCH messages with MAC padding, the eNodeB 204 transmits the PDCCH message 220 to the UE 202 that modifies, in this case reduces, the amount of physical resources and/or modulation and coding scheme (MCS) so as to match the required transport block size required to send the compressed voice packet data with no, or minimal, MAC padding. Once the UE 202 has been made aware of the change via PDCCH message 220, the eNodeB 204 transmits a further PDSCH message 222 that does not utilise any MAC padding.

During transmissions, it is possible that the codec rate of voice packet 224 may reduce. In this case, the codec rate has reduced from 12.2kbps to 4.75kbps, resulting in voice data of 95 bits, with a 20msec codec packet period, and subsequent CMR and ToC headers with data byte aligning being required. Therefore, in this case, the voice packet 224 has 112 bits of codec data and 320 bits of RTP/UDP/IPv4 header, resulting in a total of 432 bits. This results in an SO packet of 120 bits 226 to be transmitted by the eNodeB 204. In this case a MAC PDU of 144 bits is required, compared to the previous MAC PDU of 288 bits. Therefore, in order to utilise the current SPS resources, a significant amount of MAC padding will be required.

At this point the eNodeB 204 detects immediately that a smaller voice packet is being employed by observing RLC buffer occupancy and RLC SDU size, and adds MAC padding to ensure that the SO packet 226 is able to utilise the currently defined SPS resources. In this case, this means that significant amounts of MAC padding need to be employed to increase the transport block size of the SO packet 224 in order to fit current PDSCH resources. As a result, PDSCH message(s) 228 is/are employed that has/have exactly the same MCS and physical resources used in 216.

However, in the case of PDSCH message(s) 228, a large amount of MAC padding is utilised to ensure that currently defined SPS resources can be utilised without having to utilise PDCCH resources. In this case, although the eNodeB 204 is aware that a smaller voice packet 226 is being transmitted, the eNodeB 204 employs its hysteresis timer 218 in order to minimise PDCCH resources being transmitted to the UE 202. Therefore, in this case, although the number of PDCCH resources may be reduced, a major disadvantage is that multiple PDSCH messages 228 are sent that utilise a large amount of MAC padding.

After the hysteresis timer 218 has expired, which depends on a trade-off between fewer PDCCH messages being transmitted and reducing the amount of PDSCH messages with MAC padding, the eNodeB 204 transmits the PDCCH message 230 to the UE 202 that modifies, in this case reduces, the amount of physical resources and/or modulation and coding scheme (MCS) so as to match the required transport block size required to send the compressed voice packet data with no, or minimal, MAC padding. Once the UE 202 has been made aware of the change via PDCCH message 230, the eNodeB 204 transmits a further PDSCH message 232 that does not utilise any MAC padding.

It is clear that in the abovementioned scenario, the SPS scheduler in the eNodeB 104, 204 needs to be able to determine and control a wide range of packet sizes. As a result, a complex and expensive SPS scheduler is required at least in the eNodeB 104, 204 in order to deal with the size of the variation in voice packets. Furthermore, depending on a trade-off between PUCCH usage and transfer block size, there may be instances where multiple PUSCHs are transmitted with MAC padding, wasting resources, or instances where PUCCH messages are transmitted regularly in order to provide the correct transfer block size without padding, thereby unfortunately negating the effect of SPS scheduling.

Therefore, there is a need to provide a simpler and more cost effective scheduler at least in the eNodeB 104, 204, which may not suffer from the disadvantages discussed above.

### Summary of the invention

The present invention provides communication units (such as base stations), integrated circuits and methods of operation at such communication units in a communication system that supports a base station communicating with a terminal device, as described in the accompanying claims. Specific embodiments of the invention are set forth in the dependent claims. These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified message sequence chart of an LTE system utilising semi-persistent scheduling in an uplink scenario, as defined in the art.
FIG. 2 illustrates a simplified message sequence chart of an LTE system utilising semi-persistent scheduling in a downlink scenario, as defined in the art.
FIG. 3 illustrates a 3GPP™ long term evolved (LTE) cellular communication system adapted in accordance with some example embodiments of the present invention.
FIG. 4 illustrates a wireless communication unit in accordance with some example embodiments of the present invention.
FIG. 5 illustrates an example message sequence chart of a compression context aware SPS downlink system in accordance with some example embodiments of the invention.
FIG. 6 illustrates an example message sequence chart of a compression context aware SPS uplink system in accordance with some example embodiments of the invention.
FIG. 7 illustrates an example flow chart of a compression context aware SPS downlink system in accordance with some example embodiments of the invention.
FIG. 8 illustrates an example flow chart of compression context aware SPS uplink system in accordance with some example embodiments of the invention.
FIG. 9 illustrates a simplified example of a typical computing system that may be employed to implement signal processing functionality in embodiments of the invention.

### Detailed description

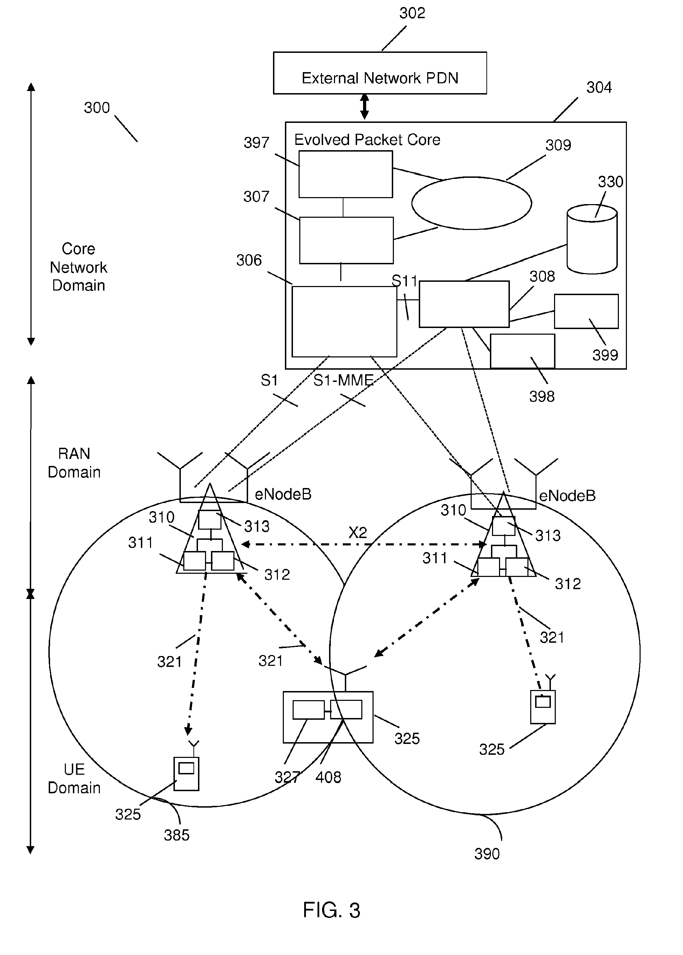

Referring now to FIG. 3, a wireless communication system 300 is shown in outline, in accordance with one example embodiment of the invention. In this example embodiment, the wireless communication system 300 is compliant with, and contains network elements capable of operating over, a universal mobile telecommunication system (UMTS™) air-interface. In particular, the embodiment relates to a system's architecture for an Evolved-UMTS Terrestrial Radio Access Network (E-UTRAN) wireless communication system, which is currently under discussion in the third Generation Partnership Project (3GPP™) specification for long term evolution (LTE), based around OFDMA (Orthogonal Frequency Division Multiple Access) in the downlink (DL) and SC-FDMA (Single Carrier Frequency Division Multiple Access) in the uplink (UL), as described in the 3GPP™ TS 36.xxx series of specifications. Within LTE, both time division duplex (TDD) and frequency division duplex (FDD) modes are defined.

The wireless communication system 300 architecture consists of radio access network (RAN) and core network (CN) elements 304, with the core network elements 304 being coupled to external networks 302 (named Packet Data Networks (PDNs)), such as the Internet or a corporate network. The CN elements 304 comprise a packet data network gateway (P-GW) 307. In order to serve up local content, the P-GW may be coupled to a content provider. The P-GW 307 may be further coupled to a policy control and rules function entity (PCRF) 397 and a Gateway 306.

The PCRF 397 is operable to control policy control decision making, as well as for controlling the flow-based charging functionalities in a policy control enforcement function PCEF (not shown) that may reside in the P-GW 307. The PCRF 397 may further provide a quality of service (QoS) authorisation class identifier and bit rate information that dictates how a certain data flow will be treated in the PCEF, and ensures that this is in accordance with a UE's 325 subscription profile.

In example embodiments, the Gateway 306 is a Serving Gateway (S-GW). The Gateway 306 is coupled to a mobility management entity MME 308 via an S11 interface. The MME 308 is operable to manage session control of Gateway bearers and is operably coupled to a home subscriber server (HSS) database 330 that is arranged to store subscriber communication unit 325 (user equipment (UE)) related information. As illustrated, the MME 308 also has a direct connection to each eNodeB 310, via an S1-MME interface.

The HSS database 330 may store UE subscription data such as QoS profiles and any access restrictions for roaming. The HSS database 330 may also store information relating to the P-GW 307 to which a UE 325 can connect. For example, this data may be in the form of an access point name (APN) or a packet data network (PDN) address. In addition, the HSS database 330 may hold dynamic information relating to the identity of the MME 308 to which a UE 325 is currently connected or registered.

The MME 308 may be further operable to control protocols running between the user equipment (UE) 325 and the CN elements 304, which are commonly known as Non-Access Stratum (NAS) protocols. The MME 308 may support at least the following functions that can be classified as: functions relating to bearer management (which may include the establishment, maintenance and release of bearers), functions relating to connection management (which may include the establishment of the connection and security between the network and the UE 325) and functions relating to inter-working with other networks (which may include the handover of voice calls to legacy networks). The Gateway 306 predominantly acts as a mobility anchor point and is capable of providing internet protocol (IP) multicast distribution of user plane data to eNodeBs 310. The Gateway 306 may receive content via the P-GW 307, from one or more content providers 309 or via the external PDN 302. The MME 308 may be further coupled to an evolved serving mobile location centre (E-SMLC) 398 and a gateway mobile location centre (GMLC) 399.

The E-SMLC 398 is operable to manage the overall coordination and scheduling of resources required to find the location of the UE that is attached to the RAN, in this example embodiment the E-UTRAN. The GMLC 399 contains functionalities required to support location services (LCS). After performing an authorisation, it sends positioning requests to the MME 308 and receives final location estimates.

The P-GW 307 is operable to determine IP address allocation for a UE 325, as well as QoS enforcement and flow-based charging according to rules received from the PCRF 397. The P-GW 307 is further operable to control the filtering of downlink user IP packets into different QoS-based bearers (not shown). The P-GW 307 may also serve as a mobility anchor for inter-working with non-3GPP technologies such as CDMA2000 and WiMAX networks.

As the Gateway 306 comprises an S-GW, the eNodeBs 310 would be connected to the S-GW 306 and the MME 308 directly. In this case, all UE packets would be transferred through the S-GW 306, which may serve as a local mobility anchor for the data bearers when a UE 325 moves between eNodeBs 310. The S-GW 306 is also capable of retaining information about the bearers when the UE 325 is in an idle state (known as EPS connection management IDLE), and temporarily buffers downlink data while the MME 308 initiates paging of the UE 325 to re-establish the bearers. In addition, the S-GW 306 may perform some administrative functions in the visited network, such as collecting information for charging (i.e. the volume of data sent or received from the UE 325). The S-GW 306 may further serve as a mobility anchor for inter-working with other 3GPP™ technologies such as GPRS™ and UMTS™.

As illustrated, the CN 304 is operably connected to two eNodeBs 310, with their respective coverage zones or cells 385, 390 and a plurality of UEs 325 receiving transmissions from the CN 304 via the eNodeBs 310. In accordance with example embodiments of the present invention, at least one eNodeB 310 and at least one UE 325 (amongst other elements) have been adapted to support the concepts hereinafter described.

The main component of the RAN is an eNodeB (an evolved NodeB) 310, which performs many standard base station functions and is connected to the CN 304 via an S1 interface and to the UEs 325 via a Uu interface. A wireless communication system will typically have a large number of such infrastructure elements where, for clarity purposes, only a limited number are shown in FIG. 3. The eNodeBs 310 control and manage the radio resource related functions for a plurality of wireless subscriber communication units/terminals (or user equipment (UE) 325 in UMTS™ nomenclature). Each of the UEs 325 comprise a transceiver unit 327 operably coupled to signal processing logic 408 (with one UE illustrated in such detail for clarity purposes only). The system comprises many other UEs 325 and eNodeBs 310, which for clarity purposes are not shown. In examples, UEs 325 may communicate with an eNodeB via communications link 321.

Clearly, the various components within the eNodeB 310 can be realized in discrete or integrated component form, with an ultimate structure therefore being an application-specific or design selection.

In some examples, eNodeBs 310 may comprise, among other things, a dynamic scheduler module 311 operably coupled to a semi-persistent scheduler (SPS) module 312, the functions of both of which are controlled by controller module 313 and are described in more detail with respect to later figures.

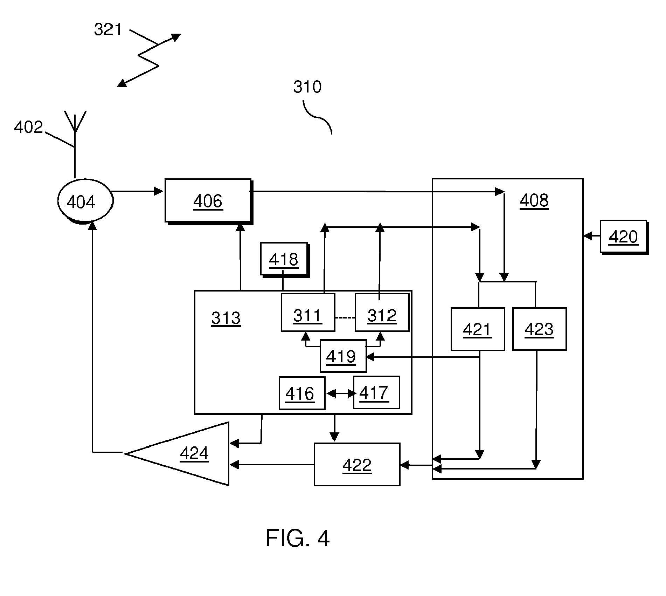

Referring now to FIG. 4, a block diagram of a wireless communication unit, adapted in accordance with some example embodiments of the invention, is shown. In practice, purely for the purposes of explaining embodiments of the invention, the wireless communication unit is described in terms of a nodeB or eNodeB, such as eNodeB 310. The wireless communication unit 310 contains an antenna 402, for receiving transmissions 321, coupled to an antenna switch or duplexer 404 that provides isolation between receive and transmit chains within the wireless communication unit 310. One or more receiver chains, as known in the art, include receiver front-end circuitry 406 (effectively providing reception, filtering and intermediate or base-band frequency conversion). The receiver front-end circuitry 406 is coupled to a signal processing module 408 (generally realized by a digital signal processor (DSP)). A skilled artisan will appreciate that the level of integration of receiver circuits or components may be, in some instances, implementation-dependent.

The controller 313 maintains overall operational control of the wireless communication unit 310. The controller 313 is also coupled to the receiver front-end circuitry 406 and the signal processing module 408. In some examples, the controller 313 is also coupled to a buffer module 417 and a memory device 416 that selectively stores operating regimes, such as decoding/encoding functions, synchronization patterns, code sequences, and the like. A timer 418, for example a hysteresis timer, is operably coupled to the controller 313 to control the timing of operations (e.g. transmission or reception of time-dependent signals) within the wireless communication unit 310.

As regards the transmit chain, this essentially includes an input module 420, coupled in series through transmitter/modulation circuitry 422 and a power amplifier 424 to the antenna 402, antenna array, or plurality of antennas. The transmitter/ modulation circuitry 422 and the power amplifier 424 are operationally responsive to the controller 313.

In some examples, the controller 313 may further comprise a first scheduling module 311 and a second scheduling module 312. In some examples, first scheduling module 311 may comprise a dynamic scheduling module, and second scheduling module 312 may comprise an SPS module. In some examples, wireless communication unit 310 may be operable to switch between first and second scheduling modules 311, 312. In other examples, wireless communication unit 310 may be operable to utilise both scheduling modules 311, 312 together.

The functions of both a dynamic scheduling module and SPS module are controlled by controller module 313 and are described in more detail with respect to later figures. In some examples, first scheduling module 311 may be operably coupled to second scheduling module 312, wherein both first scheduling module 311 and second scheduling module 312 may be further operably coupled to, and controlled by, header compression/decompression scheduler decision function module 419, arranged to determine which scheduler is employed based on inputs from the actual compression and decompression functions. In some examples, header compression/decompression scheduler decision function module 419 may be further operably coupled to compressor module 421. Thus, is some cases, switching between schedulers may be controlled by the state of the compressor module 421.

The signal processor module 408 in the transmit chain may be implemented as distinct from the signal processor in the receive chain. Alternatively, a single processor may be used to implement a processing of both transmit and receive signals, as shown in FIG. 4. Clearly, the various components within the wireless communication unit 310 can be realized in discrete or integrated component form, with an ultimate structure therefore being an application-specific or design selection.

In some examples, signal processor module 408 may comprise compressor module 421 and decompressor module 423. In some examples, compressor module 421 may be operable to transmit its compression status to header compression/decompression scheduler decision function module 419 in order to enable selection of one or both of first scheduling module 311 and second scheduling module 312.

In some further examples, decompressor module 423 may also be operable to transmit its decompression status to header compression/decompression scheduler decision function module 419. Therefore, in some examples, compressor module 421 and decompressor module 423 may enable the header compression/decompression scheduler decision function module 419 to enable selection of one or both of first scheduling module 311 and second scheduling module 312.

Thus, in some examples, second scheduling module 312 may be less complex and easily implemented if a codec rate is fixed, namely if:
1. It is only employed when the UE is in SO compression state.
2. It selects appropriate physical resource to allow the MAC PDU appropriate to the SO compressor state packet size to transmitted.

If some other functionality is employed and say second scheduling module 312 is used as soon as a voice call is detected, then much more complex functionality is required in the second scheduling module 312 because the MAC PDU coming out of the compressor varies in size.

If, in one example, the codec rate can vary, then second scheduling module 312 may well require additional complexity, but advantageously such additional complexity will be less than would otherwise be the case because codec rate changes are rare and in the voice case should really only be implemented if higher rates are not succeeding.

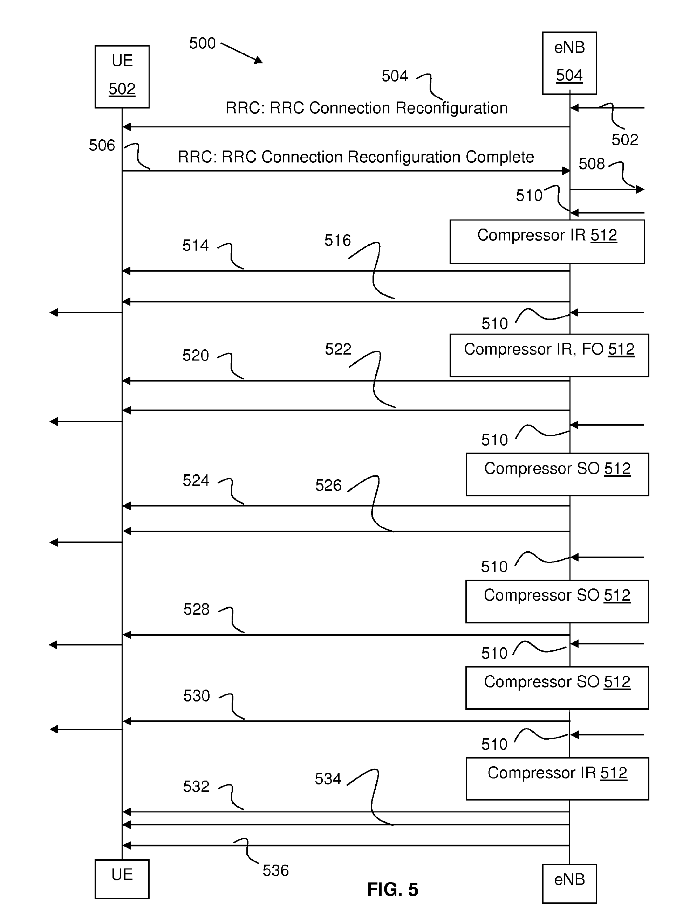

Referring to FIG. 5, an example message sequence chart 500 of a compression context aware SPS downlink system in accordance with some example embodiments of the invention is shown. In this example, compression context aware SPS downlink system may comprise UE 502 and eNodeB 504. In this example, eNodeB 504 may initially be required to establish a radio bearer 505, which may require transmitting a radio resource control (RRC) connection reconfiguration message 506 to UE 502. RRC message 506 may be operable to define the periodicity of future SPS resources, and contain information on the SPS C-RNTI. In response to this message, UE 502 may transmit an RRC connection reconfiguration complete message 507 to the eNodeB 504 that may enable a radio bearer to be established with the core network 508. The above discussion of radio bearer establishment is well known in the art, and only illustrated here as an example of potential operation.

Once the above connection has been established between eNodeB 504 and UE 502, eNodeB 504 may be required to transmit a data packet 510 that it receives from the core network, for example a voice packet, to UE 502. In this example, the eNodeB 504 may contain, amongst other components, modules and circuits, a dynamic scheduling module and an SPS module (for example modules 311 and 312 from FIG. 3 and FIG. 4).

In some examples of the invention, the eNodeB 504 may be said to be 'compression context aware'. Thus, in some examples, following a receipt of data packet 510 to be forwarded to UE 502, eNodeB 504 may determine the state of its compressor 512. In this example, the eNodeB 504 determines that the compression state of compressor 512 is initially in the IR state, before transmitting a PDCCH to the UE 502. In this example, the PDCCH defines a PDCP PDU size for a subsequent PDSCH transmission. Therefore, in some examples, the eNodeB may be operable to dynamically determine the compression state of its compressor 512, and in response thereto dynamically control a selection of whether to use dynamic scheduler module or SPS module (modules 311 and 312 from FIG. 3 and FIG. 4) at any instant in time.

In some examples, it may be advantageous to utilise a simpler and/or less expensive SPS module within the eNodeB 504. In order to utilise a simpler and/or less expensive SPS module, it may be necessary to minimise any potential size variation of transport blocks, for example. Minimising the size variation of transport blocks may further increase the efficiency of the SPS module.

Therefore, in some examples, the eNodeB 504 may determine that utilising the SPS module while the compressor 512 is in the IR state may not be suitable, based on future potential changes in PDCP PDU sizes. Therefore, the eNodeB 504 may determine that the dynamic scheduler module should be utilised.

In this instant, eNodeB 504 may then transmit a PDCCH control message 514 to UE 502 utilising dynamic scheduling. In some examples, a subsequent PDSCH message 516 that has adequate resources to transmit data packet 510 may be transmitted from the eNodeB 504 to the UE 502. In this example, PDCCH control message 516 may only utilise the C-RNTI that may have been previously assigned to the UE as part of the previous random access procedure when it first obtains an RRC connection as a means of addressing UE 502. This may be because the eNodeB 504 may have determined that utilising the SPS module may not be suitable.

In some examples, if the eNodeB 504 detects buffer occupancy on any resource block (e.g. radio link control (RLC) instance) then it may schedule resources to UE 502 using dynamic scheduler module. For example, eNodeB 504 may transmit a PDCCH 514 in order to allocate a single subframe's worth of resources.

In some examples, the dynamic scheduler module may limit a rate of resource allocation on resource blocks associated with RTP VoIP data to that defined in the GBR value provided from higher layers within the system.

In some examples, it may be assumed that uncompressed headers may be utilised, for example token bucket mechanisms.

In some examples, utilising dynamic scheduling, a PDCCH may be transmitted for every subsequent received data packet 510, prior to forwarding the data packet 510 in a PDSCH message. For example, as shown, compressor 512 may still be in the IR state, or within an intermediate compression state, for example IR-DYN, UO-2 or UO-1. Thus, in this example, if the eNodeB 504 detects buffer occupancy on any resource block (RLC instance) then it may again schedule resources to this UE 502 using dynamic scheduling, for example, using a PDCCH 520, which may allocate a single subframe's worth of resources. Further, the dynamic scheduler module may limit a rate of resource allocation on the resource block(s) associated with RTP VoIP data to that defined in the GBR value provided from higher layers using token bucket mechanisms, for example. Again, in some examples, uncompressed headers may be utilised. As illustrated, a subsequent PDSCH message 522 containing the subsequent data packet 511 may be transmitted from the eNodeB 504 to the UE 502. In this example, PDCCH control message 520 may only utilise the C-RNTI that may have been previously assigned to the UE as part of the previous random access procedure as a means of addressing UE 502. This may be because the eNodeB 504 may have determined that utilising the SPS module may not be suitable.

In some examples, eNodeB 504 may wish to transmit a further received data packet 513. In some examples, the eNodeB 504 may determine the compression state of compressor 512 prior to transmitting data packet 510 to UE 502, and in this instant determine that the compressor 512 has transitioned to a second order (SO), state. Therefore, in this example, the compressor 512 may be operable to fully compress received data packet 513, for example, into a UO-0 state.

In some examples, the eNodeB 504 may then determine that it may be advantageous to utilise the SPS scheduler module, in contrast to the previously used dynamic scheduler. Therefore, in this example, the eNodeB 504 transitions from use of the dynamic scheduler module to use of the SPS module. In response to this, the eNodeB 504 transmits a PDCCH 524 to the UE 502, which defines appropriate downlink resources for the UO-0 compressed downlink RTP packets, for example any packets that may be associated with the SO compressor state.

In some examples, the PDCCH 524 may comprise the SPS Cell Radio Network Temporary Identifier (C-RNTI) that may have been signalled to the UE 502 in SPS information contained in a previous RRCConnectionReconfiguration message 506. In some examples, the PDCCH 524 may be operable to configure SPS resources in the UE 502. In this example, a subsequent PDSCH message 526 may be transmitted from the eNodeB 504 to the UE 502 that contains the compressed voice packet 513 without any additional MAC padding. In some examples, the PDCP PDU size may reflect the reduced size of SO compressed data packet 513, and, due to signalling this to UE 502, the reduced size PDSCH 526 may not require additional MAC padding. In this example, PDCCH message 524 may further comprise the SPS C-RNTI defined in previous RRC message 506, which, in this example, may comprise information on the periodicity of the SPS resources. Therefore, UE 502 may know that a SPS has commenced, and utilises the resources indicated by PDCCH 524, as well as utilising periodicity information previously defined in RRC message 506.

In some examples, eNodeB 504 may be required to transmit yet further data packets 515, 517 to UE 502. Again, in some examples, eNodeB 504 may be operable to determine the compression state of compressor 512 and thus determine that the compressor 512 may still be in the SO state, as shown. Therefore, in this example, the eNodeB 504 may continue to utilise the SPS scheduler module. In this example, due to SPS scheduling being utilised, subsequent PDCCH messages may not be required.

Therefore, in some examples, only subsequent PDSCH messages 528, 530 may be transmitted to UE 502 in response to receiving data packets 515, 517.

In some examples, the SPS scheduler module may ignore buffer occupancy on the resource block carrying RTP VoIP data. In some examples, following the eNodeB utilising the SPS scheduler module after the compressor has transitioned to the SO state, the SPS scheduler module may reduce the amount of subsequent MAC padding being required in future and current PDSCH messages. Further, utilising the SPS scheduler module when the compressor may be in its SO state may enable a reduced complexity SPS scheduler module to be used, as hysteresis switching may not be required due to there being less likelihood of the compression state of the compressor 512 changing.

In the illustrated example, the eNodeB 504 may then determine that the compressor 512 may no longer be in the SO state, following receipt of subsequent data packet 519. In response to this the eNodeB 504 may signal a PDCCH 532 to the UE 502 releasing SPS resources. In some examples, PDCCH 532 may comprise the SPS C-RNTI defined previously, which may indicate the release of the semi-persistently allocated downlink resources.

In this example, the eNodeB 504 may transition from use of the SPS module to the dynamic scheduler module when the compressor moves out of the SO state, which may be caused, for example, by a NACK received from the compressor 512. Further, the transition from SPS module to dynamic scheduler module may be caused if a data/voice packet 519 may be received by compressor 512, and the compressor may determine that the decompression context may require updating. In some examples, the transition from SPS module to dynamic scheduler module may be caused if the eNodeB 504 detects that the RLC buffers associated with RTP VoIP data have not seen any data passing through for a determined period, for example if a voice inactivity period is detected.

In some examples, the eNodeB 504 may send a further PDCCH message 534 to UE 502 to setup PDCP PDU sizes, for example, to enable the UE 502 to correctly receive subsequent PDSCH message 536 transmitted from the dynamic scheduler module. In some examples, transmitting and receiving information on downlink and uplink channels, for example, control and shared channels, may be seen as allocating resources for communicating between a base station, such as eNodeB 504 and terminal device, such as UE 502.

In some examples, the eNodeB 504 may determine that the compressor 512 may have returned to the SO state, and, therefore, may signal to the UE that SPS resources can be reconfigured.

In some examples, the transition from dynamic scheduler module to SPS module, and vice versa, may be based on the SO state of compressor 512. In some examples, a control processor, for example controller 313 of FIG. 3, may determine the compression state of the compressor 512. In further examples, the compressor 512 may be a compressor module in hardware, or firmware or may, in some examples be implemented in software within a controller or signal processor. In other examples, the above transition may be determined by the eNodeB 504 for any compressor state, for example IR, FO and SO states.

In some examples, the eNodeB 504 may dynamically change the threshold for switching between scheduler modules. For example, the eNodeB 504 may initially utilise the SO state of compressor 512 as the threshold for switching scheduler modules and later transition to the FO state being used as the threshold for switching scheduler modules. In some examples, dynamically changing such a threshold condition based on the compressor 512 state may allow a trade-off between SPS module complexity and an amount of PDCCH messages being transmitted.

In some examples, compression context awareness may allow for a less complex SPS scheduler module to be utilised. In further examples, compression context awareness may allow for fewer PDCCH messages to be transmitted when utilising SPS scheduling.

In yet further examples, compression context awareness may allow a transition between dynamic and SPS scheduler modules, thereby reducing the complexity and cost of the system.

In some examples, the eNodeB may comprise a plurality of dynamic scheduler modules and SPS scheduler modules and select between a plurality of them. In some examples, the plurality of dynamic scheduler modules and SPS scheduler modules may comprise schedulers of differing complexity and characteristics, thereby increasing the selection options when switching between scheduler module types.

In further examples, the eNodeB 504 may comprise a plurality of compressors 512.

In some examples, the use of compression context awareness may negate the need for hysteresis switching.

In some examples, the eNodeB 504 may be operable to determine a codec rate of received data/voice packet(s) and in response thereto may be operable to configure and remove SPS resources, via signalling to the UE 502, based on the determination of the codec rate.

It should be noted that the abovementioned description of FIG. 5 can be started and stopped at any point. The order illustrated is simply for illustrative purposes only. It should be clear that in some examples, the compressor 512 may initially be in the IR state, and in other examples, the compressor 512 may initially be in an SO state, for example.

In summary, in an example, the eNodeB 504 is a base station for communicating with a UE 502, in this example a terminal device, in a wireless communication system. In this example, the base station comprises a dynamic scheduler module (for example dynamic scheduler module 311 in FIG. 3), a semi-persistent scheduler, SPS, module 312 (for example SPS module 312 in FIG. 3), a receiver 406 arranged to receive at least one data packet 510 and a compressor module 512 arranged to compress the received at least one data packet 510 prior to transmission to the terminal device 502. A control processor (for example controller 313 of FIG. 3) is operably coupled to the compressor module 512 and arranged to determine a compression state of the compressor module 512 and based thereon select one of the dynamic scheduler module (311) and SPS module (312) to allocate resource for communicating with the terminal device 502. A transmitter 422 is arranged to transmit the compressed at least one data packet 510 to the terminal device 502 on the allocated resource.

In this example, the control processor 313 may be further operable to determine a compression state of the compressor module 512 and select the dynamic scheduler module 311 if the compressor module 512 is not in a second order state. In some cases, the control processor 313 may be further operable to select the SPS module 312 if the control processor 313 determines that the compressor module 512 is in a second order state. If this is the case, the transmitter 422 may transmit a PDCCH comprising a temporary identifier configuring SPS resources to the terminal device 502. In other cases, the control processor 313 may be operable to select the dynamic scheduler module 311 if the control processor 313 determines that the compressor module 512 has transitioned out of a second order state. In this case, the transmitter 422 may transmit a PDCCH comprising a temporary identifier removing SPS resources to the terminal device 502.

In some examples, the control processor 313 may be operable to switch between dynamic scheduler module 311 and SPS module 312, and vice versa, based on at least one determined state of compressor module 512. In other examples, the functionality of dynamic scheduler module 311 and SPS module 312 may be combined, for example in a single module. In this case, a separate SPS module may not be required as the dynamic scheduler module 311 may be modified to be aware that periodic resources used for SPS are not to be 'written over' by a dynamically scheduled resource. In this example, if the control processor 313 determines that the compressor module 512 has transitioned out of an SO state, then the control processor 313 may determine and control the dynamic scheduler module 311 to return back to conventional dynamic scheduling,

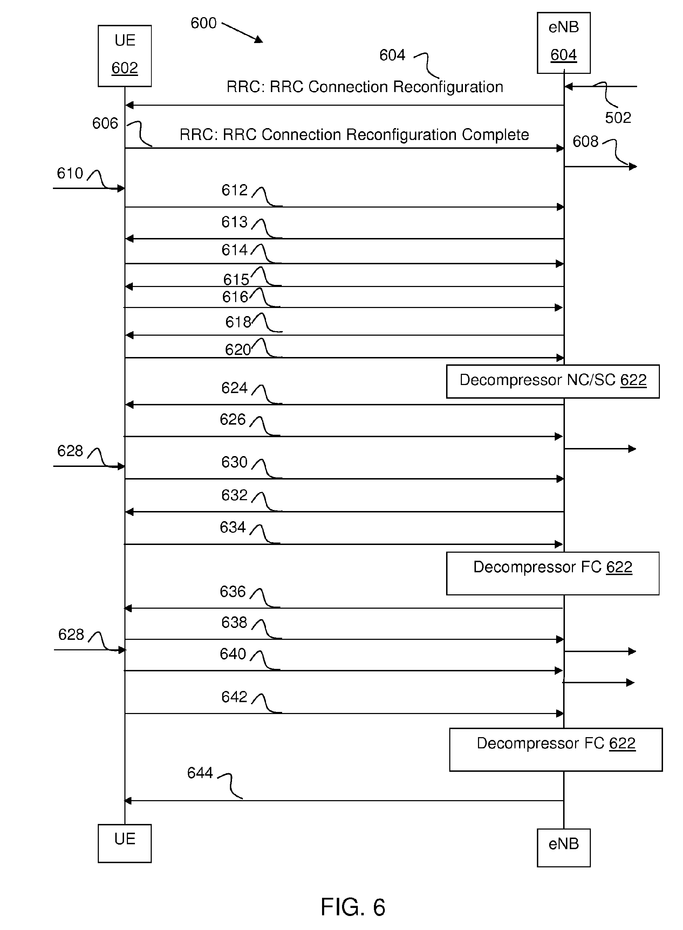

Referring to FIG. 6, an example message sequence chart 600 of a compression context aware SPS uplink system, in accordance with some example embodiments of the invention, is shown. In this example, a compression context aware SPS downlink system may comprise UE 602 and eNodeB 604. In this example, eNodeB 604 may initially be required to establish a radio bearer, which may require transmitting a radio resource control (RRC) connection Reconfiguration message 603 to UE 602. In some examples, this RRC message 603 may comprise periodicity information of SPS resources and information on the SPS C-RNTI. In response to this message, UE 602 may transmit an RRC connection reconfiguration complete message 606 to the eNodeB 604 that may enable a radio bearer to be established 608. The above discussion of radio bearer establishment is well known in the art, and only illustrated here as an example of potential initial operation.

Once the above connection has been established between eNodeB 604 and UE 602, UE 602 may wish to transmit a data packet, for example a RTP packet 610, to eNodeB 604. In some examples, UE 602 may transmit a scheduling request (SR) 612 to eNodeB 604 for an allocation of uplink resources. In response to the SR request 612, eNodeB 604 may transmit a subsequent PDCCH message 613 to UE 602, which may allocate enough resources for the UE 602 to transmit a buffer status report 614. Buffer status report 614 may indicate the amount and type of resources the UE 602 wishes to transmit. In response to receiving buffer status report 614, eNodeB 604 may determine and allocate the correct amount of resources for the UE 602 to transmit the PDCP PDU without padding and transmit a subsequent PDCCH message 615 to UR 602. In some examples, UE 602 may then forward/transmit data/voice packet 610 to eNodeB 604 on PUSCH 616.

In some examples, the eNodeB 604 may initially utilise a dynamic scheduler module (not shown) as the compression state of the UE 602 may not be in the SO state, for example. In some examples, UE 602 may transmit data/voice packet 610 on a resized PUSCH 620, in response to PDCCH message 618.

In some examples, the eNodeB 604 may determine, utilising compression context awareness, that its compressor 622 may not be in the full context (FC) state and, therefore, may transmit a NACK to the UE 602.

In some examples, the eNodeB 604 may subsequently transmit a further PUCCH message 624 to UE 602 to re-define PDCP-PDU sizes. In response to PDCCH message 624, UE 602, in some examples, may transmit data/voice packet 610 on redefined PUSCH 626.

In further examples, the UE 602 may wish to transmit further data/voice packet 628. In some examples, data/voice packet 628 may initially be SO compressed. In some examples, UE 602 may transmit a SR message 630 to eNodeB 604 requesting further allocation of uplink resources. In some examples, in response to SR message 630, eNodeB 604 may transmit a PDCCH message 632 using a dynamic scheduler module if the decompressor 622 is not in the FC state, using compression context awareness, for example. In response to PDCCH message 632, UE 602 may transmit data/voice packet 628 on a subsequent PUSCH message 634 using defined PDCP PDU sizes from PDCCH message 632.

In some examples, the eNodeB's 604 compressor 622 may have transitioned to the full context (FC) state and be in receipt of fully compressed, SO, data/voice packet 628 from PUSCH message 634.

In some examples, if the eNodeB 604 receives a BSR indicating buffer occupancy on any logical channel group, then it may schedule resources to the UE 602 utilising dynamic scheduler module.

In some examples, if the decompressor 622 may be in its full compression state, and it receives a UO-0 packet that it may cyclic redundancy check (CRC) pass, for example an ACK may be generated by the decompressor 622, then the eNodeB 604 may transition from dynamic scheduler module to SPS module, utilising compression context awareness.

In some examples, eNodeB 604 may transmit a PDCCH 636 to UE 602 that may define appropriate uplink resources for the UO-0 compressed uplink RTP packets, for example any packets associated with the SO compressor state. Further, in some examples, PDCCH 636 may contain the SPS C-RNTI that may have been signalled to UE 602 in SPS information contained in the previously transmitted RRCConnectionReconfiguration message 604, for example. In some examples, PDCCH message 636 may signal to the UE 602 that there may be a transition from dynamic scheduler module to SPS scheduler module. In some examples, UE 602 may transmit data/voice packet 628 utilising PUSCH message 638.

In some examples, a yet further data/voice packet 639 may need to be transmitted by the UE 602 to the eNodeB 604. In some examples, as SPS scheduling may have been configured, there may be no requirement for the UE 602 to transmit a further SR message to the eNodeB 604. Therefore, in some examples, subsequent PDCCH messages may not be required.

In some examples, due to SPS scheduling being utilised, PUSCH message 640 utilising SPS resources may be transmitted to eNodeB 604 without a need for a yet further SR message. In some examples, if the eNodeB 604 receives a BSR indicating buffer occupancy on any logical channel group other than the logical channel group associated with the resource block carrying RTP VoIP data, then the eNodeB 604 may schedule resources to the UE 602 using SPS scheduler module.

In some examples, a further data/voice packet 628 may be transmitted from the UE 602 to the eNodeB 604 on a further PUSCH message 642 utilising SPS resources. In some examples, the eNodeB 604, utilising compression context awareness, may determine that there needs to be a transition from using a SPS module to using a dynamic scheduler module. In some examples, the transition may be due to the decompressor 622 generating a NACK, causing the compressor in the UE 602 to move out of its SO state and, therefore, generate larger packets. In further examples, the transition from using a SPS module to using a dynamic scheduler module may be due to a defined number, e.g. 'implicitReleaseAfter' parameter signalled to the UE 602 in the SPS configuration of the RRCConnectionReconfiguration message 603, of MAC PDUs being received with no data present.

In some examples, in response to a potential NACK message from decompressor 622, a PDCCH message 644 may be transmitted to UE 602, using SPS C-RNTI from RRCConnectionReconfiguration message 603, which may indicate a release of the semi-persistently allocated uplink resources.

In some examples, in response to receiving MAC PDUs that contain no data, the UE 602 may autonomously release the semi-persistently allocated uplink resources. In some examples, the eNodeB 604 may determine that the packet received from UE 602 may not be SO compressed and, therefore, may transmit a PDCCH message 644 to UE 602, which may indicate the release of semi-persistently allocated uplink resources. In some examples, in response to PDCCH message 644, the system may return to dynamic resource scheduling.

In some examples, the transition from dynamic scheduler module to SPS module, and vice versa, may be determined by the FC state of decompressor 622. In other examples, the above transition may be determined by the eNodeB 604 for any decompressor state, for example NC, SC and FC states.

In some examples, the eNodeB 604 may dynamically change the threshold for switching between scheduler modules. For example, the eNodeB 604 may initially utilise the FC state of decompressor 622 as the threshold for switching schedulers and, in the future, determine that the SC state may be used as the threshold for switching scheduler modules.

In some examples, dynamically changing the threshold condition based on a state of the decompressor 622 may allow a trade-off between SPS module complexity and an amount of PDCCH messages being transmitted.

It should be noted that the abovementioned description of FIG. 6 can be started and stopped at any point. The order illustrated in simply for illustrative purposes only.

In summary, in one example, the eNodeB is a base station for communicating with a UE 602, in this example a terminal device 602, in a wireless communication system. In this example, the base station comprises a dynamic scheduler module (for example dynamic scheduler module 311 in FIG. 3), a semi-persistent scheduler, SPS, module 312 (for example SPS module 312 in FIG. 3), a receiver 406 arranged to receive a resource request message from the terminal device, a decompressor module 622 for selectively decompressing received messages, a control processor (for example controller 313 of FIG. 3) is operably coupled to the decompressor module 622 and arranged to determine a compressor state of the received resource request message, and based thereon select one of the dynamic scheduler module and SPS module to allocate resource for communicating with the terminal device 602. A transmitter 422 is arranged to transmit a message indicating the allocated resource to the terminal device 602.

In some cases, the base station 604 may further determine a compression state of the decompressor module 622 and, in some cases, may select the SPS module 312 if the decompressor module 622 is in a full context state, or select the dynamic scheduler module 311 if the decompressor module 622 is not in full context state. In some cases, the received resource request message may be a scheduling request message. In this case, the control processor 313 may be further operable to select the dynamic scheduler module 311 if at least one of the following conditions is satisfied: the received scheduling request message is not in a second order state, medium access control, MAC, padding is detected in the received scheduling request message. In some cases, the control processor 313 may be arranged to further process a data packet on a subsequent received PUSCH, determine a compression state of the data packet and based thereon select one of the dynamic scheduler module 311 and semi persistent scheduler module 312 to allocate resource for further communicating with the terminal device 602. In some cases, the control processor 313 may be further operable to select the SPS module 312 if the received request message is in a second order state.

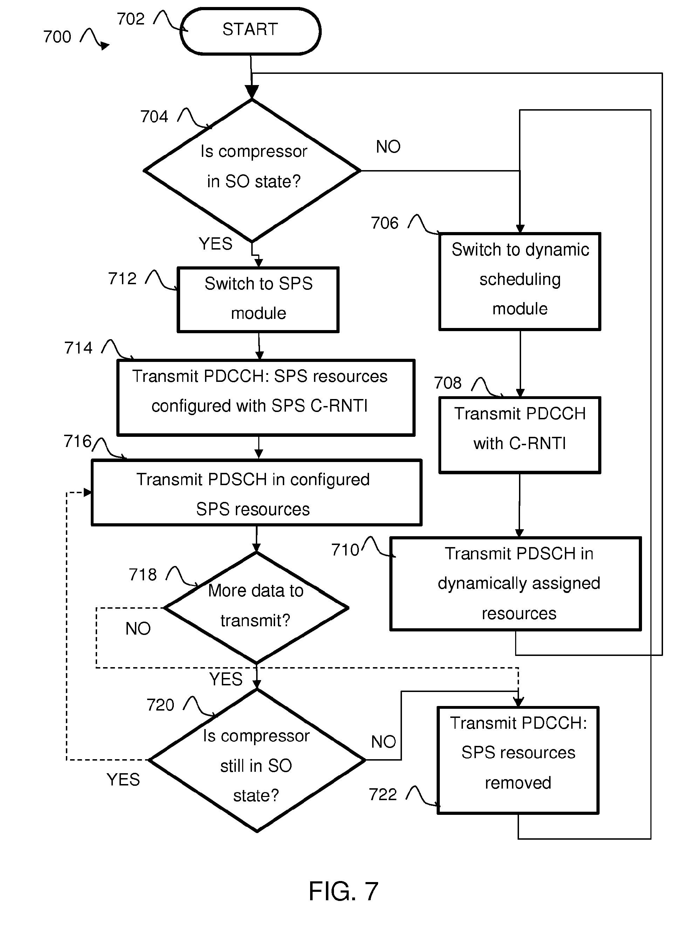

Referring to FIG. 7, a simplified flow chart 700 illustrating compression context aware SPS scheduling in the downlink case for some examples of the invention is shown. It has been assumed that all connection establishment and radio bearer establishment steps have already been completed. Further, in this example, the SO compression state has been chosen as the compression state to trigger a potential change in scheduler modules. In other examples, different compression states may trigger a potential change in scheduler modules. Further, in some examples, the trigger for potentially changing schedulers may be dynamically determined during operation.

Initially, at 702, the eNodeB may begin downlink operation and, at 704, may determine whether the compressor is in its full context, compressed, state. If the eNodeB determines that the compressor is not in its SO state, the eNodeB may initiate its dynamic scheduling module, at 706. Subsequently, at 708, the eNodeB may transmit a PDCCH message to a desired UE. In some examples, the PDCCH message may allocate a single subframe's worth of resources to the UE. At 710 the eNodeB may transmit a subsequent PDSCH message to the UE using dynamically assigned resources. In some examples, the dynamic scheduling module may limit a rate of resource allocation on resource blocks associated with RTP VoIP data to that defined in the GBR value that may have been provided from higher layers. In some examples, the eNodeB may then return to 704.

In some examples, if the eNodeB determines that the compressor is in the SO state, the eNodeB may switch in 712 to use of SPS module. In some examples, at 714, a PDCCH may be transmitted to the UE using SPS scheduling. The PDCCH may define appropriate downlink resources for, say, UO-0 compressed downlink RTP packets, for example any packets associated with the SO state.

In some examples, PDCCH may comprise a SPS C-RNTI that may have been signalled to the UE in the SPS information contained in previous RRCConnectionReconfiguration messages.

In some examples, at 716, the eNodeB may then transmit a PDSCH to the UE using configured SPS resources. In some examples, if the SPS module detects buffer occupancy on any resource block apart from the one associated with the resource block carrying RTP VoIP data, then the eNodeB may schedule resources to the UE utilising SPS scheduling module. In some examples, the SPS scheduling module may ignore buffer occupancy on resource blocks carrying RTP VoIP data.

In some examples, at 718, the eNodeB may determine whether there are more data/voice packets to transmit to the UE. If the eNodeB determines that there is/are no more data/voice packet(s) to transmit, the eNodeB may return to 704. In some examples, while the SPS resources are still active, PDSCH 716 may still have to be transmitted even if there is no higher layer VoIP packet available to be transmitted. In this case, the MAC layer may have to have additional padding added to it. Therefore, in some examples, after a predetermined number of MAC PDUs containing only padding are transmitted at 716, the eNodeB may transition, denoted by dotted line out of 718, to 722 to remove SPS resources. In other examples, if the eNodeB determines that there is more data/voice packets to transmit, the eNodeB may move to 720, and determine whether the compressor is still in its SO state. In some examples, if the eNodeB determines that the compressor is still in its SO state, the eNodeB may loop to 716 and transmit an additional PDSCH message. In some examples, as denoted by the hashed line, the eNodeB may have to wait a defined amount of time in order to transmit the SPS resources, which may be determined by the defined periodicity of the system. Therefore, in this example, the scheduler may not be able to transmit PDSCH message 716 directly after 720 as the scheduler may need to wait to transmit SPS resources. In some examples, the waiting time may be based on the defined periodicity of the system, which may be based on a VoIP service. In some examples, the VoIP service may have a packet periodicity of, say, 20msec and, therefore, the SPS resources would be configured with a periodicity to match the VoIP packet periodicity. Therefore, although PDSCH message 716 could be transmitted every subframe, as in LTE, in practice the eNodeB may have to wait to transmit PDSCH 716 every 20msec, resulting in a waiting time.

In some examples, this step may have an advantage of reducing the number of control messages required. In some examples, if the eNodeB determines that the compressor is not still in the SO state, the eNodeB may transition to 722. In some examples, the compressor may have transitioned out of its SO state if, for example, a NACK is received from the compressor, or a data/voice packet has arrived that the compressor decides that the decompression context needs updating.

Further, in other examples, the compressor may have transitioned out of its SO state if, for example, the compressor detects that the RLC buffers associated with RTP VoIP data have not seen any data passing through for a specified period, for example a voice inactivity period may be detected.

In some examples, at 722, the eNodeB may transmit a PDCCH message to the UE, for example using SPS C-RNTI, which may indicate a release of semi-persistently allocated downlink resources. In some examples, eNodeB may loop from 722 to 706 and continue its operation as discussed above.

In some examples, switching between different scheduling modules may have an advantage of reducing complexity of the SPS scheduling module, thereby reducing complexity of the architecture of the eNodeB. Further, in some examples, utilising compression context aware SPS may negate the requirement for a hysteresis switch and timer for the eNodeB. In examples, references to singular modules and devices should not be seen as limiting. Therefore, references to dynamic scheduling modules and SPS modules, for example, could refer to a plurality of dynamic and SPS modules, as well as a plurality of compressors, for example.

In summary, in an example, the eNodeB may be a base station arranged to communicate with a UE, in this case a terminal device, in a wireless communications system. In this example, the base station: receives at least one data packet; compresses the received at least one data packet prior to transmission to the terminal device; observes a compression state of the compressor module; and based thereon selects one of the dynamic scheduler module and semi persistent scheduler module, based on the determined compression state, in order to allocate resource for communicating with the terminal device; and transmits the compressed at least one data packet to the terminal device on the allocated resource.

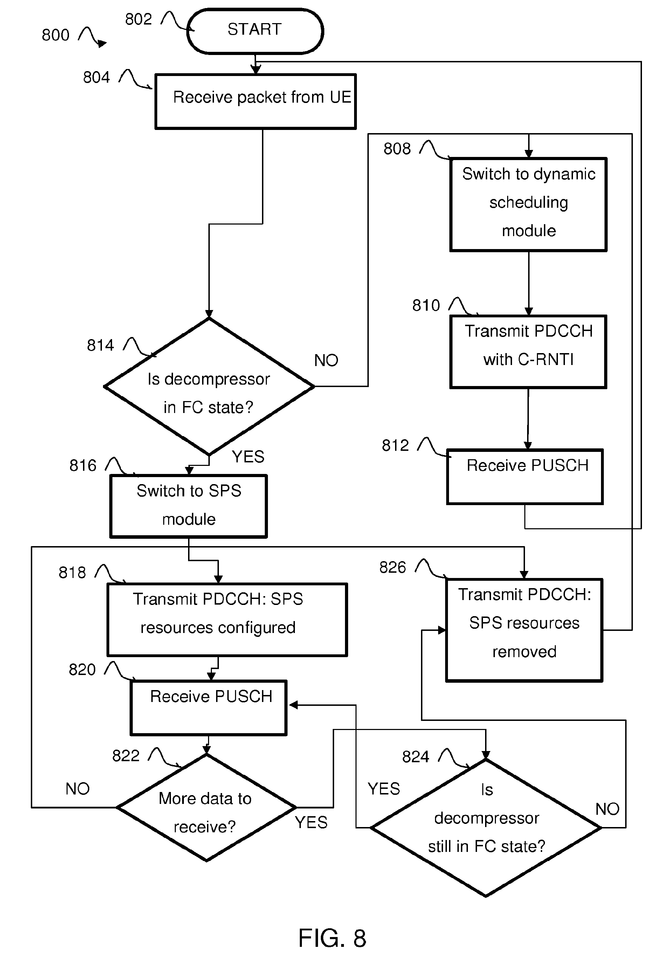

Referring to FIG. 8, an example flow chart 800 illustrates compression context aware SPS scheduling in the uplink case. It has been assumed that all connection establishment and radio bearer establishment steps have been completed. Further, in this example, the FC decompression state has been chosen as the decompression state to trigger a potential change in scheduler modules. In other examples, different decompression states may trigger a potential change in scheduler modules. Further, in some examples, the trigger for potentially changing scheduler modules may be dynamically determined during operation. Further, in this example, the FC state of the decompressor is a further trigger for switching modules. In other examples, NC, SC or FC states of the decompressor may be triggers. Further, in some examples, the trigger for potentially changing scheduler modules may be dynamically determined during operation.

Initially, at 804, the eNodeB receives a data/voice packet from a UE.

If at 814 the eNodeB determines that the decompressor is in FC state the eNodeB transitions to 816 and switches to its SPS module. In some examples, at 818, the eNodeB 800 may then transmit a PDCCH to the UE, which may define appropriate uplink resources for the UO-0 compressed uplink RTP packets, e.g. any packets that may be associated with the SO compressor state. In some examples, the PDCCH message may comprise the SPS C-RNTI that may have been signalled to the UE in the SPS information contained in a previous RRCConnectionReconfiguration message.

At 820 the eNodeB may receive a subsequent PUSCH message from the UE. At 822, the eNodeB determines whether (or not) there is any more data to be received from the UE. In 822, if the eNodeB determines that there is no more data to be received, in some examples the eNodeB may transition to 826, and transmit a PDCCH to remove SPS resources. Further, if a specified number of PUSCHs are received that contain only padding (i.e. no MAC PDUs) the eNodeB may transition to 826. In some further examples, if the eNodeB determines that there is more data to be received, the eNodeB may transition to 824, where it determines whether (or not) the decompressor is still in FC state. In 824, in some examples, if the eNodeB determines that the decompressor is still in FC state, the eNodeB may, in some examples, transition back to 820.

In 824, in some examples, if the eNodeB determines that the decompresor is not in FC state, the eNodeB may transition to 826. In some examples, at 826, eNodeB may transmit a PDCCH to the UE, using SPS C-RNTI, which may indicate the release of the semi-persistently allocated uplink resources. In some examples, after step 826, the eNodeB may transition back to 808 and continue its operation as discussed above. In some examples, if the eNodeB determines at 814 that the decompressor is not in FC state, the eNodeB may, in some examples at 808, switch to its dynamic scheduling module. At 810, in some examples, the eNodeB may transmit a PDCCH with C-RNTI to the UE in order to setup uplink resources. In some examples, if the eNodeB receives a BSR indicating buffer occupancy on any logical channel group, resources may be scheduled using the dynamic scheduling module. In response thereto, eNodeB may receive 812 a PUSCH from the UE. In some examples, the PUSCH may only contain BSR information. In some examples, after 812, the eNodeB may return to 804.

In summary, in an example, the eNodeB may be a base station arranged to communicate with a terminal device, for example a UE. In this example, the base station: receives receiving a physical uplink resource and determines from a format of data contained therein a decompression state of a decompressor module; receives at least one resource request message from the terminal device; determines a compression state of the decompressor module; selects one of a dynamic scheduler and semi persistent scheduler based on the determination of the decompression state; and transmits a message indicating the allocated resource to the terminal device.

In examples of the invention, scheduler modules, for example dynamic scheduler and SPS modules may be discrete separate modules that switch between each other, or the scheduler modules may have a combined functionality, i.e. both dynamic scheduler and SPS modules are combined within a single module and are not switched, but resources for both exist at the same time and utilise different parts of the overall time/frequency resource space.

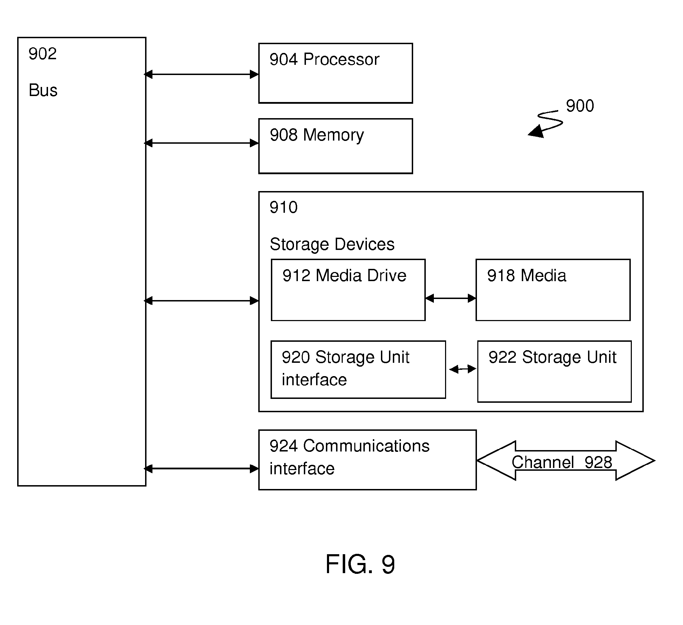

Referring now to FIG. 9, there is illustrated a typical computing system 900 that may be employed to implement software-controlled power control functionality in embodiments of the invention that utilize compression context aware semi persistent scheduling at a base station, such as an eNodeB. Computing systems of this type may be used in wireless communication units, such as base stations eNodeBs. Those skilled in the relevant art will also recognize how to implement the invention using other computer systems or architectures. Computing system 900 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 900 can include one or more processors, such as a processor 904. Processor 904 can be implemented using a general or special-purpose processing engine such as, for example, a microprocessor, microcontroller or other control logic. In this example, processor 904 is connected to a bus 902 or other communications medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory (ROM) or other static storage device coupled to bus 902 for storing static information and instructions for processor 904.

In some examples, computing system 900 may be operable to control a first scheduler and a second scheduler. In some examples, first scheduler may comprise at least one dynamic scheduler. In further examples, second schedule may comprise at least one semi persistent scheduler. In yet further examples, computing system 900 may be operable to determine compression context aware semi persistent scheduling.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 918 may include, for example, a hard disk, floppy disk, magnetic tape, optical disk, CD or DVD, or other fixed or removable medium that is read by and written to by media drive 912. As these examples illustrate, the storage media 918 may include a computer-readable storage medium having particular computer software or data stored therein.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a universal serial bus (USB) port), a PCMCIA slot and card, etc. Software and data transferred via communications interface 924 are in the form of signals which can be electronic, electromagnetic, and optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 908, storage device 918, or storage unit 922. These and other forms of computer-readable media may store one or more instructions for use by processor 904, to cause the processor to perform specified operations. Such instructions, generally referred to as 'computer program code' (which may be grouped in the form of computer programs or other groupings), when executed, enable the computing system 900 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 900 using, for example, removable storage drive 922, drive 912 or communications interface 924. The control logic (in this example, software instructions or computer program code), when executed by the processor 904, causes the processor 904 to perform the functions of the invention as described herein.

In one example, a tangible computer program product comprising executable code stored therein for wirelessly communicating data between a base station and a terminal device, wherein the code is operable for, when executed at a base station, performing at least one of the aforementioned flowchart/ methods.

It will be appreciated that, for clarity purposes, the above description has described embodiments of the invention with reference to different functional units and processors. However, it will be apparent that any suitable distribution of functionality between different functional units or processors, without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors. Thus, the elements and components of an embodiment of the invention may be physically, functionally and logically implemented in any suitable way. Indeed, the functionality may be implemented in a single unit, in a plurality of units or as part of other functional units.

Those skilled in the art will recognize that one or more of the functional blocks and/or logic elements herein described may be implemented in one or more integrated circuits for incorporation into one or more of the communication units.

One example of the integrated circuit that is suitable for a network element, such as a base station, may comprise a compressor module arranged to receive and compress at least one data packet prior to transmission to the terminal device; and a control processor arranged to: receive the at least one compressed data packet from the compressor module; determine a compression state of the compressor module; and based thereon select one of a dynamic scheduler module or a semi persistent scheduler module in the base station to allocate resource for communicating with the terminal device. A transmitter integrated circuit may then transmit the compressed at least one data packet to the terminal device on the allocated resource.

One example of a further integrated circuit for a base station may comprise a decompressor module arranged to receive a resource request message prior to transmission to the terminal device; a control processor arranged to: determine a compression state of the received resource request message; optionally determine a compression state of the decompressor module; and based thereon select one of a dynamic scheduler module or a SPS module in the base station to allocate resource for communicating with the terminal device. A transmitter then transmits a message indicating the allocated resource to the terminal device.

Furthermore, it is intended that boundaries between logic blocks are merely illustrative and that alternative embodiments may merge logic blocks or circuit elements or impose an alternate composition of functionality upon various logic blocks or circuit elements. It is further intended that the architectures depicted herein are merely exemplary, and that in fact many other architectures can be implemented that achieve the same functionality.

Although the present invention has been described in connection with some example embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Furthermore, the use of specific 3GPP™ terms, for example control and shared channels, are only used for explanatory purposes. It is envisaged that in other example applications or wireless communication systems, other channels may be used, and/or control and shared channels may be used interchangeably. Furthermore, in other examples, a different order of the channels being utilized may be employed.

## Claims

1. A base station for communicating with a terminal device in a wireless communication system, the base station comprising:
a dynamic scheduler module;
a semi-persistent scheduler, SPS, module;
a receiver arranged to receive at least one data packet;
a compressor module arranged to compress the received at least one data packet prior to transmission to the terminal device;
a control processor operably coupled to the compressor module and arranged to determine a compression state of the compressor module and based thereon select one of the dynamic scheduler module and semi persistent scheduler module to allocate resource for communicating with the terminal device; and
a transmitter arranged to transmit the compressed at least one data packet to the terminal device on the allocated resource.

2. The base station of Claim 1, wherein the control processor is further operable to select the dynamic scheduler module if the control processor determines that the compressor module is not in a second order state or has transitioned out of a second order state.

3. The base station of Claim 2, wherein the transmitter is further arranged to transmit a Physical Downlink Control Channel, PDCCH, comprising a temporary identifier to the terminal device.

4. The base station of Claim 3, wherein the transmitter is further arranged to transmit a PDCCH comprising a temporary identifier removing SPS resources to the terminal device module if the control processor determines that the compressor module has transitioned out of a second order state.

5. The base station of Claim 1, wherein the control processor is further operable to select the SPS module if the control processor determines that the compressor module is in a second order state.

6. The base station of Claim 5, wherein the transmitter is further arranged to transmit a PDCCH comprising a temporary identifier configuring SPS resources to the terminal device.

7. An integrated circuit for a base station arranged to communicate with a terminal device in a wireless communication system, the integrated circuit comprising:
a compressor module arranged to receive and compress at least one data packet prior to transmission to the terminal device; and
a control processor arranged to:
observe a compression state of the compressor module; and
based thereon select one of a dynamic scheduler module or a semi persistent scheduler module in the base station to allocate resource for communicating with the terminal device; and
transmit the compressed at least one data packet to the terminal device on the allocated resource.

8. A method for a base station arranged to communicate with a terminal device in a wireless communications system, the method comprising:
receiving at least one data packet;
compressing the received at least one data packet prior to transmission to the terminal device;
observing a compression state of the compressor module; and based thereon
selecting one of the dynamic scheduler module and semi persistent scheduler module, based on the determined compression state, to allocate resource for communicating with the terminal device; and
transmitting the compressed at least one data packet to the terminal device on the allocated resource.

9. A base station for communicating with a terminal device in a wireless communication system, the base station comprising:
a dynamic scheduler module;
a semi-persistent scheduler, SPS, module;
a receiver arranged to receive a resource request message from the terminal device;
a decompressor module for selectively decompressing received messages;
a control processor operably coupled to the decompressor module and arranged to observe a decompression state of the decompressor module and based thereon select one of the dynamic scheduler module and semi persistent scheduler module to allocate resource for communicating with the terminal device; and
a transmitter arranged to transmit a message indicating the allocated resource to the terminal device.

10. The base station of claim 9, wherein the control processor is further arranged to process a data packet on a subsequent received physical uplink shared channel, observe a decompression state of the decompressor module and based thereon select one of the dynamic scheduler module and semi persistent scheduler module to allocate resource for further communicating with the terminal device.

11. The base station of claim 10, wherein the control processor is further operable to select the SPS module if the received request message is in a full context, FC, state.

12. The base station of Claim 11, wherein the control processor is further operable to determine a decompression state of the decompressor module and select the SPS module if the decompressor module is in a full context state, or select the dynamic scheduler module if the decompressor module is not in a full context state.

13. The base station of Claim 9, wherein the decompressor module is further operable to decompress the received resource request message if it is compressed and arranged to decompress the received resource request message prior to a subsequent transmission to the terminal device.

14. An integrated circuit for a base station, the integrated circuit comprising:
a decompressor module arranged to receive a resource request message prior to transmission to the terminal device;
a control processor arranged to:
determine a decompression state of a decompressor module; and
based thereon select one of a dynamic scheduler module or a SPS module in the base station to allocate resource for communicating with the terminal device; and
transmit a message indicating the allocated resource to the terminal device.

15. A method for a base station arranged to communicate with a terminal device in a wireless communications system, the method comprising:
receiving a physical uplink resource and determining from a format of data contained therein a decompression state of a decompressor module;
receiving at least one resource request message from the terminal device;
selecting one of a dynamic scheduler and semi persistent scheduler based on the determination of the decompression state; and
transmitting a message indicating the allocated resource to the terminal device.
